# EUROPEAN PATENT APPLICATION

(11) **EP 4 711 196 A1**
(43) Date of publication of application: **18.03.2026**
(21) Application number: 24803608.9
(22) Date of filing: 12.04.2024
(51) Int. Cl.: B60L 53/66, B60L 53/30, B60L 58/10

(54) **EVCC DEVICE**

(30) Priority: 09.05.2023 KR 20230060133
(71) Applicant: LG INNOTEK CO. LTD, Gangseo-gu Seoul 07796 (KR)
(72) Inventor: SHIN, Kwang Seob, Seoul 07796 (KR)
(74) Representative: DREISS Patentanwälte PartG mbB
(86) International application number: PCT/KR2024/004981
(87) International publication number: WO 2024/232552

(57) **Abstract**

An EVCC device according to an embodiment of the present invention comprises: a load switch unit, to which a control pilot (CP) signal is input from an electric vehicle supply equipment (EVSE); a first detection unit, which is connected to the load switch unit and performs a first conversion of the CP signal into a first signal; a second detection unit, which is connected to the first detection unit and performs a second conversion of the first signal into a second signal; and an MCU, which detects the first and second signals.

## Description

### [Technical Field]

The present invention relates to an EVCC device, and more specifically, to an EVCC device capable of stably detecting a PWM voltage.

### [Background Art]

Eco-friendly vehicles such as electric vehicles (EVs) or plug-in hybrid electric vehicles (PHEVs) use electric vehicle supply equipment (EVSE) installed at charging stations to charge their batteries.

To this end, an Electric Vehicle Charging Controller (EVCC) is mounted within the EV, communicates with the EV and EVSE, and controls the charging of the EV. For example, when the EVCC receives a signal from the electric vehicle instructing it to start charging, it can control the charging to start. When it receives a signal from the electric vehicle it to end charging, it can control the charging to terminate.

Electric vehicle charging methods can be categorized into fast charging and slow charging, based on the charging time. In the case of fast charging, the battery is charged by a direct current (DC) being supplied by the charger. Conversely, for slow charging, the battery is charged by an alternating current (AC) being supplied to the charger. Therefore, a charger used for fast charging is called a fast charger or a DC charger, and a charger used for slow charging is called a slow charger or an AC charger.

Since electric vehicle charging systems charge with high-voltage electricity, they can cause safety issues such as electric shock or system failures due to reverse current. Accordingly, electric vehicle charging systems control the charging process through various sequences to prevent diverse problems that may occur during charging and provide various structures to enhance system stability.

However, current electric vehicle charging systems are not able to detect or prevent all of the various problems that may occur during the battery charging process. Therefore, a solution is required to address this.

### [Detailed Description of the Invention]

### [Technical Subject]

The technical problem that the present invention is intended to solve is to provide an EVCC device that can stably detect a PWM voltage.

### [Technical Solution]

To solve the aforementioned technical problem, an EVCC device according to an embodiment of the present invention comprises: a load switch unit, to which a control pilot (CP) signal is inputted from an electric vehicle supply equipment (EVSE); a first detection unit, which is connected to the load switch unit and performs a first conversion of the CP signal into a first signal; a second detection unit, which is connected to the first detection unit and performs a second conversion of the first signal into a second signal; and an MCU, which detects the first and second signals.

The MCU can detect a state change of the CP signal through the first signal, and the MCU can detect a maximum voltage value of the CP signal through the second signal.

The first signal may have a faster response speed to a state change of the CP signal than the second signal.

The amplitude of the first signal may be greater than the amplitude of the second signal.

The first detection unit includes a first capacitor, the second detection unit includes a second capacitor, and the capacitance of the first capacitor may be greater than the capacitance of the second capacitor.

The load switch unit may include two resistors having different values and being connected in parallel, and one of the two resistors may include a switch being connected in series.

The first detection unit includes a first node being connected to the MCU, the second detection unit includes a second node being connected to the MCU, and the first detection unit may include a buffer being connected to the load switch unit, a resistor being connected to ground between an output terminal of the buffer and the first node, and a first capacitor.

The second detection unit may include a diode and a resistor being connected in series with the first node, and a second capacitor being connected between the second node and the ground.

### [Advantageous Effects]

According to the present embodiments, stability can be enhanced by monitoring the CP signal in two stages.

In addition, user safety can be ensured by detecting the state change of the CP signal within the falling time.

### [Brief Description of Drawings]

FIG. 1 illustrates a vehicle charging system.
FIG. 2 illustrates a vehicle charging circuit as defined in the DIN 70121 standard.
FIG. 3 is a block diagram of an EVCC device according to the present embodiment.
FIG. 4 is a circuit diagram of an EVCC device according to the present embodiment.
FIG. 5 is a circuit diagram of an EVCC device according to another embodiment of the present invention.
FIG.s 6 and 7 illustrate examples of signals detected in the circuit diagram of an EVCC device according to the present embodiment.
FIG. 8 illustrates a CP signal being inputted to an EVCC device according to the present embodiment and signals from each detection unit.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention. In the present specification, the singular form may include the plural form unless specifically stated in the phrase, and when described as "at least one (or more than one) of A and B and C", it may include one or more of all combinations that can be combined with A, B, and C.

In addition, in describing the components of the embodiment of the present invention, terms such as first, second, A, B, (a), and (b) may be used.

These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above)" or "below (under)" of each component, "on (above)" or "below (under)" means that it includes not only the case where the two components are directly in contact with, but also the case where one or more other components are formed or disposed between the two components. In addition, when expressed as "on (above)" or "below (under)", the meaning of not only an upward direction but also a downward direction with respect to one component may be included.

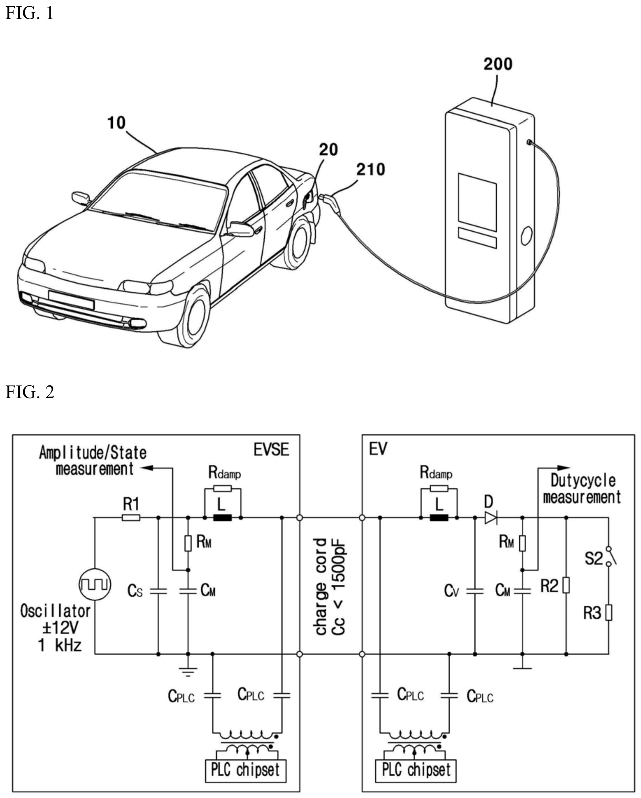

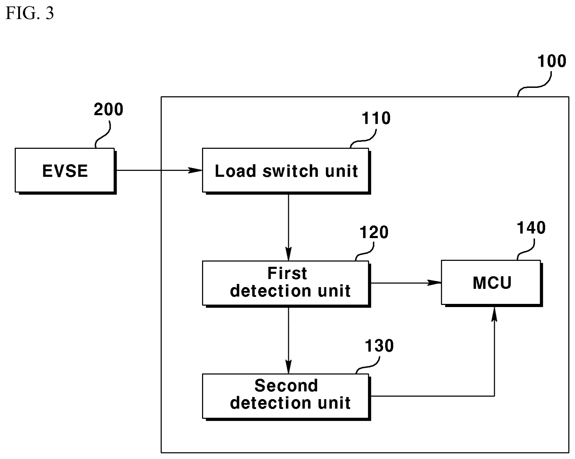

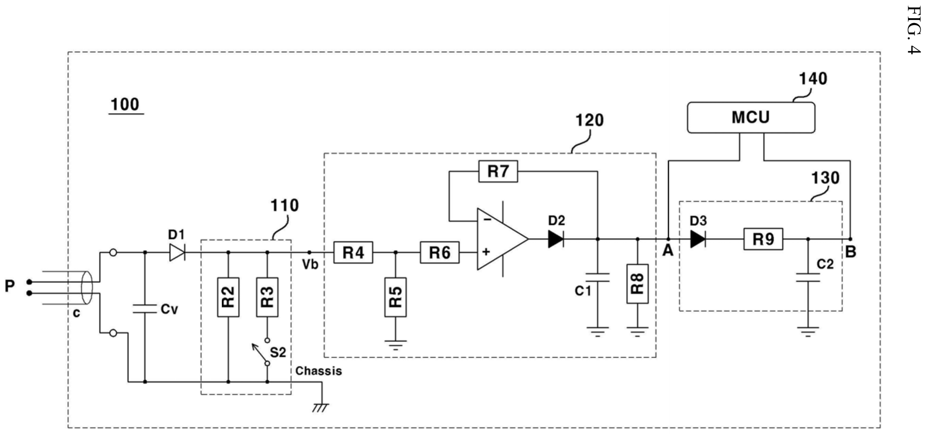

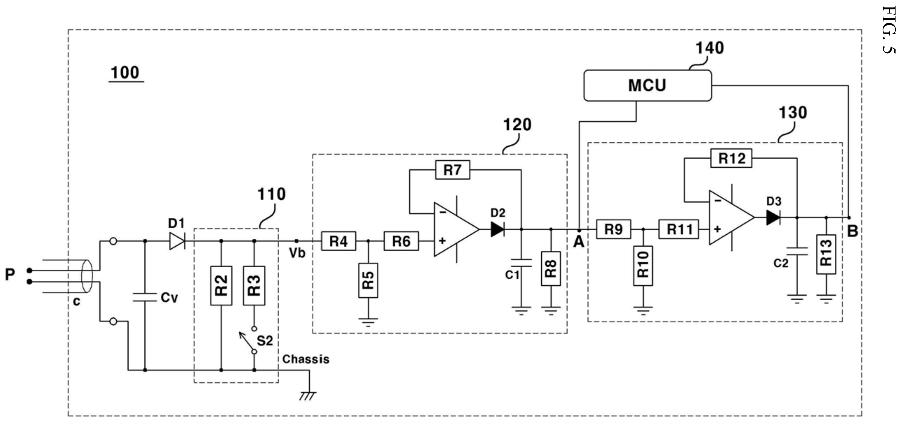

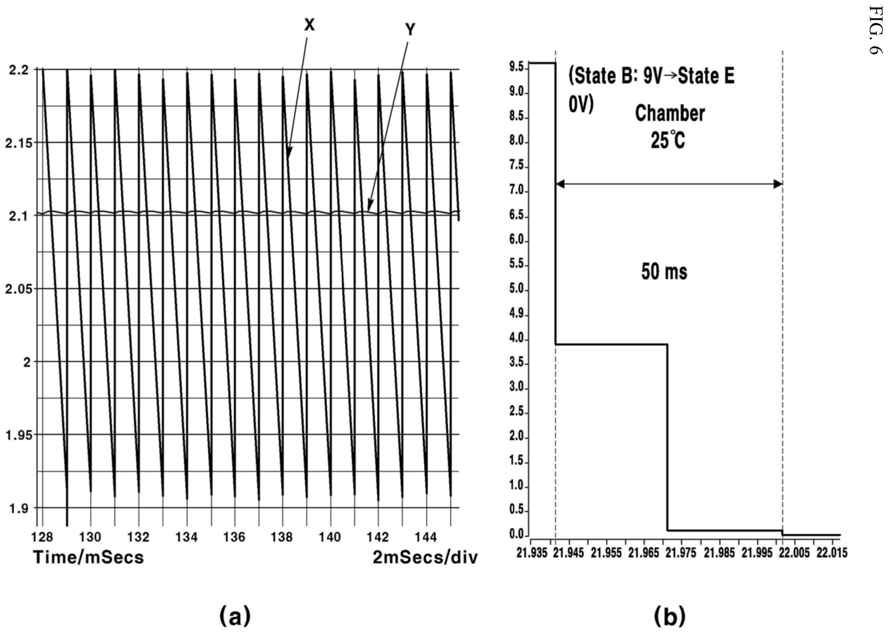

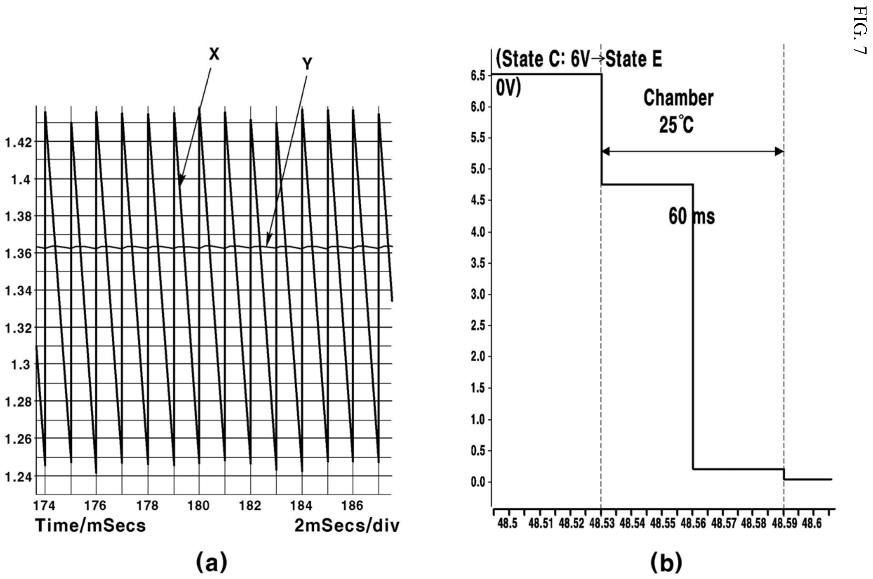

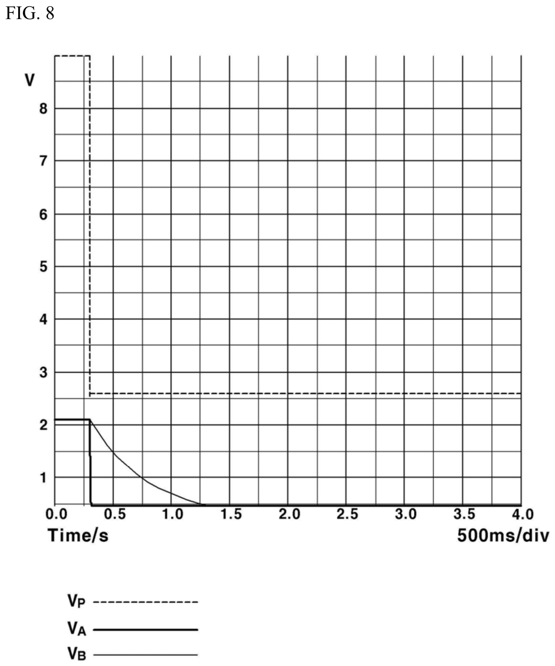

FIG. 1 illustrates a vehicle charging system; FIG. 2 illustrates a vehicle charging circuit as defined in the DIN 70121 standard; FIG. 3 is a block diagram of an EVCC device according to the present embodiment; FIG. 4 is a circuit diagram of an EVCC device according to the present embodiment; FIG. 5 is a circuit diagram of an EVCC device according to another embodiment of the present invention; FIGS. 6 and 7 illustrate examples of signals detected in the circuit diagram of an EVCC device according to the present embodiment; and FIG. 8 illustrates a CP signal being inputted to an EVCC device according to the present embodiment and signals from each detection unit.

The vehicle charging system according to the present embodiment may refer to a system for charging the battery of an electric vehicle that operates using electric energy as a power source. Referring to FIG. 1, the vehicle charging system according to an embodiment of the present invention may include an Electric Vehicle Supply Equipment (EVSE) **200** and an Electric Vehicle (EV) **10.**

The EVSE **200** is a device that supplies AC or DC power, and can be disposed at a charging station or disposed in a home, and can also be implemented to be portable. The EVSE **200** can be used interchangeably with a charging station (supply), an AC charging station (AC supply), and a DC charging station (DC supply). The EVSE **200** can receive AC or DC power from the main power source. The main power source can include a power system, and the like. The EVSE **200** can transform or convert the AC or DC power supplied from the main power source and supply it to the electric vehicle **10.**

An electric vehicle **10** refers to a vehicle that operates by receiving all or part of its energy from an onboard battery. The electric vehicle **10** may include not only an electric vehicle that runs solely on electric energy charged in a battery, but also a Plug-in Hybrid Electric Vehicle (PHEV) that runs in parallel with an engine that uses fossil fuels. The battery installed in the electric vehicle **10** may be charged by receiving power from an EVSE **200.**

The EVSE **200** may include a charging control device for transmitting and receiving various control signals required to charge the battery of the electric vehicle **10** and controlling the battery charging process. The charging control device may transmit and receive control signals to and from the electric vehicle **10** and perform the battery charging process. The control signals may include information such as charging preparation, charge termination, and proximity detection. The charging control device may include a communication device for communicating with the electric vehicle **10.** The communication device may communicate with the electric vehicle **10** using Power Line Communication (PLC), a Controller Area Network (CAN), or the like. The communication device may be included in the charging control device or configured separately.

A cable, a connector **210,** and an inlet **20** electrically connect the EVSE **200** and the electric vehicle. The cable transmits power and signals between the EVSE **200** and the electric vehicle **10.** The cable may include a power line for transmitting power, a signal line for transmitting a control signal related to charging, a ground line for connecting the ground, and the like. The cable is connected to the EVSE **200.** According to one embodiment, the EVSE **200** and the cable may be directly connected without a separate connection configuration. According to another embodiment, the EVSE **200** and the cable may be connected through a combination of a socket-outlet provided in the EVSE **200** and a plug provided in the cable.

The connector **210** can be connected to a cable, and the inlet **20** can be provided in the electric vehicle **10.** The connector **210** and the inlet **20** can be combined and referred to as a coupler. The connector **210** and the inlet **20** have a structure that can be coupled to each other, and the electric vehicle **10** and the EVSE **200** can be electrically connected through the coupling of the connector **210** and the inlet **20.** The inlet **20** and the connector **210** can be directly connected, but can also be connected through an adapter. The adapter can be used when the charging specifications of the EVSE **200** and the electric vehicle **10** are different, making it impossible to directly connect the connector **210** and the inlet **20.** For example, an adapter can be used to connect a connector **210** of an EVSE **200** according to the CHAdeMO standard specification and an inlet **20** of an electric vehicle **10** according to the chaoji standard specification.

The connector **210** and the inlet **20** may have a plurality of pins that can be coupled to each other. For example, one among the plurality of pins may be a pin for a CP (Control Pilot) port through which a CP signal is transmitted between the EVSE **200** and the EVCC **100,** another may be a pin for a PD (Proximity Detection) port that detects the proximity of the connector **210** and the inlet **20,** and yet another may be a pin for a Protective Earth (PE) port that is connected to the protective ground of the EVSE **200.** Another among the plurality of pins may be a pin for driving a motor for opening a fuel tank flap, yet another may be a pin for sensing the motor, still another may be a pin for temperature sensing, still another may be a pin for LED sensing, and yet still another may be a pin for CAN communication. One of the plurality of pins may be a pin for a voltage line applied from a collision detection sensor within the electric vehicle **10,** another may be a battery pin supplying charging power to the electric vehicle **10,** and yet another may be a pin for high voltage protection. However, the number and function of the pins are not limited thereto and may be modified in various ways.

An Electric Vehicle Communication Controller (EVCC) device **100** can control part or all of the process related to battery charging of an electric vehicle **10.** The EVCC device **100** can communicate with an EVSE **200.** The EVCC device **100** can transmit and receive control commands related to the battery charging process from the EVSE **200.** The EVCC device **100** can communicate with a charging control device provided in the EVSE **200** and can transmit and receive control commands related to the battery charging process from the charging control device.

The EVCC device **100** according to the present embodiment may include a load switch unit **110,** a first detection unit **120,** a second detection unit **130,** and an MCU **140.**

The EVSE **200** generates a CP (Control Pilot) signal. The signal format of the CP signal can be either direct current (DC) or pulse width modulation (PWM). The CP signal can transmit information on the charging status to the EVCC device **100** by using the amplitude of a PWM of a specific frequency. The CP signal has specifications determined by the IEC 61851-1 standard and can be, for example, a PWM signal of ±12 V and 1 kHz. The CP signal can be generated in the form of 12 V DC (connection of connector), 9 V DC (standby time, reservation time), 9 V PWM (charging start), 6 V PWM (charging), and the like.

The EVCC device **100** may include a load switch unit **110** to which a CP signal is inputted from the EVSE **200.**

The load switch unit **110** may be connected to the input terminal **P** of the EVCC device **100.** A diode **D1** and a capacitor Cv may be included between the load switch unit **110** and the input terminal **P** to prevent a reverse voltage of the CP signal. The load switch unit **110** may include two resistors **R2** and **R3** having different values and connected in parallel. One of the two resistors **R2** and **R3** may include a switch **S2** being connected in series. One of the two resistors may have a larger resistance value than the other. For example, one of the two resistors **R2** may be 2740Ω and the other **R3** may be 1300Ω or 270Ω. The switch **S2** may be connected in series with the resistor **R3** having the smaller value of the two resistors.

In the initial charging state, the CP signal is set to DC 12 V to notify the EVCC device **100** that the EVSE **200** is ready for charging (State A). When the EVSE **200** and the EVCC device **100** are connected, the signal is changed to a 9 V PWM signal by the resistor **R1** of the EVSE **200** and the resistor **R2** of the EVCC device **100** (State B). At this time, the switch **S3** being connected to the resistor **R3** is in the off state. When the MCU **140** of the EVCC device **100** confirms that the electric vehicle **10** is in a chargeable state, it changes the switch **S3** being connected to the resistor **R3** to the on state to change the size of the CP signal to a 6 V PWM signal (State C). Afterwards, if the power of EVSE **200** is turned off or an error occurs in EVSE **200** and EVSE **200,** the CP signal can be changed to 0V (State E).

The EVCC device **100** may include a first detection unit **120** and a second detection unit **130** for detecting a CP signal.

The first detection unit **120** is connected to the load switch unit **110** and can perform a first conversion operation of the CP signal as the first signal. The first detection unit **120** can convert the CP signal into a voltage range that the MCU **140** can detect. For example, the PWM voltage range of the CP signal generated from the EVSE **200** can be a PWM signal of ±12 V and 1 kHz, and the first detection unit **120** can convert the PWM voltage range of the CP signal into a PWM signal of 0 V to 5 V and 1 kHz.

The first detection unit **120** may include a buffer connected to the output terminal **Vb** of the load switch unit **110.** The buffer may block noise generated when a CP signal generated from the EVSE **200** is inputted to the EVCC device **100** through an inlet and a cable, and suppress a delay in the rise/fall time of the PWM waveform of the CP signal. The output terminal of the buffer may include a diode **D2** to prevent reverse voltage of the CP signal.

The output terminal of the buffer may include a first capacitor **C1** and an eighth resistor **R8,** each being connected to the ground. The first detection unit **120** may include a first node being connected to the MCU **140.** The first node may include a first capacitor **C1** and an eighth resistor **R8,** each being connected to the ground. The CP signal may be first converted into the first signal by adjusting the values of the first capacitor **C1** and the eighth resistor **R8.** The first capacitor **C1** may satisfy a range of 450 nF to 500 nF, and may preferably be 470 nF. The eighth resistor **R8** may satisfy a range of 10 kΩ to 20 kΩ, and may preferably be 15 kΩ.

The second detection unit **130** is connected to the first detection unit **120** and can perform a second conversion operation from the first signal to the second signal. The second detection unit **130** can perform a second conversion operation with the second signal, which is a signal that stabilizes the first signal. For example, the first signal is a PWM signal of 1 kHz with a PWM voltage range of 0 V to 5 V of the CP signal, and the second signal can satisfy an amplitude range of the PWM signal of the CP signal of 0.001 V to 0.005 V. This is merely an example and is not particularly limited thereto.

The second detection unit **130** may include a diode **D3** to prevent reverse voltage of the CP signal. The second detection unit **130** may include a ninth resistor **R9** being connected in series with the diode **D3** and a second capacitor **C2** being connected to ground. The second detection unit **130** may include a second node connected to the MCU **140.** The second node may include a ninth resistor **R9** and a second capacitor **C2** being connected to ground. By adjusting the values of the second capacitor **C2** and the ninth resistor **R9,** a second conversion operation can be performed from the first signal to the second signal. The second capacitor **C2** may satisfy a range of 0.5 nF to 2 nF, and preferably, may be 1 nF. The ninth resistor **R9** can satisfy a range of 95 kΩ to 110 kΩ, and can be preferably 100 kΩ. The capacitance of the second capacitor **C2** can be smaller than the capacitance of the first capacitor **C1.** The value of the ninth resistor **R9** can be larger than the value of the eighth resistor **R8.**

Referring to FIG. 5, which illustrates an EVCC device **100** according to another embodiment of the present invention, the second detection unit **130** may be configured in the same form as the first detection unit **120.** At this time, the values of the second capacitor **C2** and the thirteenth resistor **R13** included in the second detection unit **130** may be different from the values of the second detection unit **130** illustrated in FIG. 4. The second capacitor **C2** may satisfy a range of 0.5uF to 2uF, and may preferably be 1uF. The thirteenth resistor **R13** may satisfy a range of 0.5MΩ to 1.5MΩ, and may preferably be 1MΩ. Unlike the second detection unit **130** illustrated in FIG. 5, the second detection unit **130** illustrated in FIG. 4 may replace an expensive buffer with a diode.

The MCU **140** is connected to the first detection unit **120** and the second detection unit **130** to detect the first signal and the second signal. The MCU **140** can detect the amplitude of the CP signal in PWM format. The MCU **140** can detect signal level information of the CP signal. The MCU **140** can detect the duty ratio of the CP signal in PWM format. The MCU **140** can monitor the CP signal generated from the EVSE **200** to control part or all of the process related to battery charging.

The MCU **140** can detect a state change of the CP signal through the first signal. The MCU **140** can detect the maximum voltage value of the CP signal through the second signal. The first signal may respond to a state change of the CP signal faster than the second signal. The amplitude of the first signal may be greater than the amplitude of the second signal. The second signal may be a signal that stabilizes the first signal.

When an error occurs in the EVSE **200** while charging an electric vehicle **10** from the EVSE **200** the CP signal drops to 0 V. The CP signal takes time to drop from the voltage during charging, 9 V or 6 V, to 0 V, and this must be detected by the EVCC device **100** within a certain period of time. Referring to FIG. 6(b), the time (Falling time) for the CP signal generated in the EVSE **200** to drop from 9 V to 0 V after an error occurs may take 50 ms. In addition, referring to FIG. 7(b), the time (Falling time) for the CP signal generated in the EVSE **200** to drop from 6 V to 0 V after an error occurs may take 60 ms. At this time, the EVCC device **100** must detect the state change of the CP signal within 100 ms.

To this end, the first signal of the EVCC device **100** sets a fast response speed to the CP signal so that the state change of the CP signal can be quickly detected. On the other hand, since the converted first signal has an unstable maximum and minimum voltage, it is converted into a stabilized second signal.

Referring to FIG. 6(a), it can be confirmed that the first signal (X) converted from the ±9 V, 1 kHz PWM CP signal generated from the EVSE **200** oscillates with a maximum voltage of 2.2 V and a minimum voltage of 1.92 V with a period of 1 ms, and the second signal (Y) oscillates with an amplitude of about 0.01 V and a period of 1 ms, and approaches 2.1 V. Referring to FIG. 7(a), it can be confirmed that the first signal (X) converted from the ±6 V, 1 kHz PWM CP signal generated from the EVSE **200** oscillates with a maximum voltage of 1.44 V and a minimum voltage of 1.245 V with a period of 1 ms, and the second signal (Y) oscillates with an amplitude of about 0.01 V and a period of 1 ms, and approaches 1.36 V.

Referring to FIG. 8, when the CP signal (Vp) generated from the EVSE **200** drops from 9 V to 2.5 V, it can be confirmed that the first signal (VA) takes the same amount of time as the state change time of the CP signal (Vp) from 2 V to 0 V, and the second signal (VB) takes about 2 sec from 2 V to 0 V.

The EVCC device according to the present embodiment can enhance stability by monitoring the CP signal in two stages, and can ensure user safety by detecting a state change of the CP signal within the falling time.

Those skilled in the art related to the present embodiment will be able to understand that it may be implemented in a modified form within a range that does not deviate from the essential characteristics of the above description. Therefore, the disclosed methods are to be considered in an illustrative rather than a limiting sense. The scope of the present invention is shown in the claims rather than the foregoing description, and all differences within the equivalent scope shall be construed as being included in the present invention.

## Claims

1. An EVCC device comprising:
a load switch unit, to which a control pilot (CP) signal is inputted from an electric vehicle supply equipment (EVSE);
a first detection unit, which is connected to the load switch unit and performs a first conversion of the CP signal into a first signal;
a second detection unit, which is connected to the first detection unit and performs a second conversion of the first signal into a second signal; and
an MCU, which detects the first and second signals.

2. The EVCC device according to claim 1,
wherein the MCU detects a state change of the CP signal through the first signal, and
wherein the MCU detects a maximum voltage value of the CP signal through the second signal.

3. The EVCC device according to claim 1,
wherein the first signal has a faster response speed to a state change of the CP signal than the second signal.

4. The EVCC device according to claim 1,
wherein the amplitude of the first signal is greater than the amplitude of the second signal.

5. The EVCC device according to claim 1,
wherein the first detection unit includes a first capacitor, the second detection unit includes a second capacitor, and
wherein the capacitance of the first capacitor is greater than the capacitance of the second capacitor.

6. The EVCC device according to claim 1,
wherein the load switch unit includes two resistors having different values and being connected in parallel, and
wherein one of the two resistors includes a switch being connected in series.

7. The EVCC device according to claim 1,
wherein the first detection unit includes a first node being connected to the MCU,
wherein the second detection unit includes a second node being connected to the MCU, and
wherein the first detection unit includes a buffer being connected to the load switch unit, a resistor being connected to ground between an output terminal of the buffer and the first node, and a first capacitor.

8. The EVCC device according to claim 1,
wherein the second detection unit includes a diode and a resistor being connected in series with the first node, and a second capacitor being connected between the second node and the ground.
